## Europäisches Patentamt
## European Patent Office
## Office européen des brevets

(19)

(11) Veröffentlichungsnummer: **0 136 368**
**B1**

(12) # EUROPÄISCHE PATENTSCHRIFT

(45) Veröffentlichungstag der Patentschrift:
21.09.88

(51) Int. Cl.⁴: **B 31 F 1/07**

(21) Anmeldenummer: **83109849.6**

(22) Anmeldetag: **03.10.83**

(54) **Verfahren zur Herstellung von Prägungen/Verformungen auf Warenbah-nen zwischen einer Prägewalze und einer Gegengeformtenwalze sowie Vorrichtung zur Durchführung dieses Verfahrens.**

(43) Veröffentlichungstag der Anmeldung:
**10.04.85 Patentblatt 85/15**

(45) Bekanntmachung des Hinweises auf die Patenterteilung:
**21.09.88 Patentblatt 88/38**

(84) Benannte Vertragsstaaten:
**AT BE CH DE FR GB IT LI NL SE**

(56) Entgegenhaltungen:
DE-A-1 436 869
DE-A-1 511 020
DE-C-1 233 127
FR-A-1 148 871
US-A-2 812 798
US-A-3 292 513
US-A-3 554 099
US-A-3 880 056
US-A-3 884 742
US-A-4 176 147

PATENTS ABSTRACTS OF JAPAN, 1978, Seite 1032
M 78; & JP - A - 53 24 195 (TOPPAN INSATSU K.K.)
06-03-1978

(73) Patentinhaber: **Saueressig & Co., Gutenbergstrasse
1-3, D-4426 Vreden (DE)**

(72) Erfinder: **Schwager, Dieter, Schabbecke, D-4426
Vreden (DE)**

(74) Vertreter: **Patentanwälte Schulze Horn und
Hoffmeister, Goldstrasse 36, D-4400 Münster (DE)**

EP 0 136 368 B1

## Beschreibung

Die Erfindung betrifft eine Vorrichtung zur Herstellung von Prägungen / Verformungen auf einer Warenbahn aus bedruckter Kunststoffolie mit einer Prägewalze (Patrize) und einer Gegengeformtenwalze (Matrize), die über Zahnräder miteinander gekoppelt sind und deren Abstand im wesentlichen der Dicke der Kunststoffolie entspricht und wobei die Vorsprünge der Prägewalze außerhalb oder im Bereich des Umfanges der gegengeformten Walze umlaufen.

Prägfähige Warenbahnen, insbesondere Papier, Karton oder Metallfolien, wie sie z. B. zur Herstellung von Verpackungsschachteln benutzt werden, werden üblicherweise erst bedruckt und dann in nachgeschalteten Prägewerken geprägt. Diese Prägewerke sind Ergänzungen an Druckmaschinen und bilden dort die letzte Bearbeitungsstation. Nachteilig ist hierbei, daß die bekannten Prägewerke mit einem wesentlich höheren Walzendruck als die vorgeschaltete Druckmaschine oder -straße arbeiten, daß sie schwierig einzurichten sind und daß das Prägeergebnis oft ungenau und fehlerhaft ist.

Eine Vorrichtung der beschriebenen Art ist beispielsweise aus der US-A-3 554 099 bekannt. Dieses Dokument zeigt eine Vorrichtung, in der zwischen einer Patrizenwalze und einer Matrizenwalze eine Kunststoff-Folienbahn mit Knicken oder Falten versehen wird, um aus dem Kunststoffmaterial Einkaufstüten herstellen zu können. Eine feinstrukturierte Prägung der Folienbahn ist hiermit nicht erzielbar, zumal die Vorsprünge der Patrize offenbar als auswechselbare, messerartige Teile ausgeführt und damit sehr grob strukturiert sind.

Es stellt sich daher die Aufgabe, eine Vorrichtung der eingangs genannten Art zu schaffen, die in eine Druckstraße oder Druckmaschine für die Bedruckung von Kunststoff-Folienbahnen problemlos integrierbar ist, deren Handhabung auch Personal möglich ist, das sonst nur mit Druckmaschinen umzugehen gewöhnt ist und für welche Präge- und Gegengeformtewalzen einfach herstellbar sind. Weiterhin soll die Vorrichtung die Erzeugung von Folien erlauben, die als Ersatz für bisher noch eingesetzte, teurere textile Stoffe verwendet werden können.

Die Lösung dieser Aufgabenstellung gelingt durch eine Vorrichtung der eingangs genannten Art, welche dadurch gekennzeichnet ist, daß die Oberfläche der Prägewalze und die Oberfläche der Gegengeformtenwalzen aus verchromtem Kupfer bestehen und entsprechend Tiefdruckwalzen geätzt sind.

In weiterer Ausgestaltung der Vorrichtung ist vorgesehen, daß die Vorsprünge der Prägewalze zur Erzeugung einer Lochung der Folie im Mikrobereich an ihrer Spitze scharfkantig ausgeführt sind.

Im folgenden wird ein Ausführungsbeispiel der Erfindung anhand einer Zeichnung näher beschrieben, die als Teilausschnitt den Prägebereich/Verformungsbereich einer Präge- und Gegengeformtenwalze zeigt.

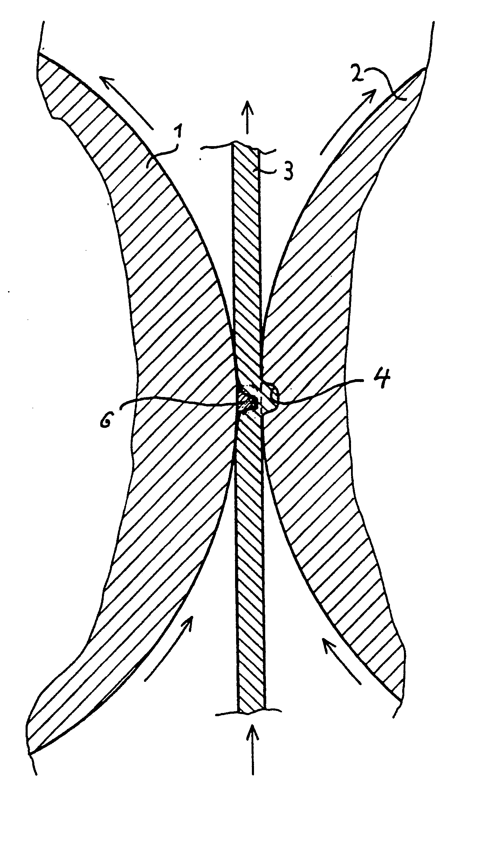

Gemäß der Zeichnung weist die Prägevorrichtung eine Prägewalze 1 und eine Gegengeformtewalze 2 auf, die nicht miteinander kämmen. Die Erhöhungen 6 der Prägewalze 1 greifen also nicht in die Vertiefung 4 der Gegengeformtenwalze 2 ein, sondern laufen außerhalb des Umfanges der Walze 2 in den nicht vertieften Stellen um.

Der Abstand zwischen den Walzen 1 und 2 entspricht der Dicke der zu prägenden/verformenden Warenbahn , wobei für den Fachmann überraschend mit der Vorrichtung die Möglichkeit besteht, hochelastische und dünne Kunststoffolien, z. B. Polyäthylen- oder PVC-Folien zu prägen/verformen.

Die beiden Walzen 1 und 2 werden praktisch drucklos eingestellt, wobei ein Druck möglich ist, der es erlaubt, die zu prägende/verformende Folie durch die Präge- und Gegengeformtewalze 1 und 2 hindurchzuziehen und diese Walzen dabei mitzunehmen.

Es ist erfindungswesentlich, daß die Verformung bzw. Prägung der Folie auf die zu prägenden/verformenden Stellen bzw. Bereiche beschränkt bleibt, wobei die Prägung/Verformung einem Tiefziehverfahren entspricht.

Die Präge- und die Gegengeformtewalze 1 und 2 bestehen aus verchromtem Kupfer und können in herkömmlicher Weise geätzt werden, wie dies bei Tiefdruckwalzen üblich ist.

Die Gegengeformtewalze 2 kann auch aus Hartgummi oder anderem, durch Laserstrahlen bearbeitbarem Material bestehen und die Vertiefung 4 weist ein Volumen auf, welches dem Volumen der Folie in dem zu prägenden/verformenden Bereich entspricht. Der zu prägende/verformende Bereich wird also ebenfalls wie der nicht zu prägende/verformende Bereich nicht gequetscht, sondern lediglich entsprechend einem Tiefziehverfahren geprägt/verformt und nimmt die durch die Erhöhung 6 der Prägewalze 1 gegebene Form an, welche mit der Form der Ausnehmungen 4 korrespondiert. Entscheidung für die Form der Prägung/Verformung ist dabei die Form der Ausnehmungen (Matritze).

Die Vorrichtung läßt sich auch für kaschierte oder verklebte Warenbahnen, z. B. Mehrfach-Verbundfolien und dergleichen verwenden.

Wenn die Erhöhungen 6 an ihrer Spitze scharfkantig ausgeführt werden, ist es möglich, gleichzeitig mit der Prägung/Verformung auch eine Lochung der Folie im Mikrobereich zu erreichen, wobei diese durch die Elastizität der Folie sich wieder schließen kann. Dadurch wird es für den Fachmann überraschend möglich, Folien mit einer gewissen Luftdurchlässigkeit zu schaffen.

Die mit der Vorrichtung bearbeiteten Fol ien können für eine Vielzahl von Anwendungsgebieten verwendet werden und weisen insbesondere den Vorteil auf, daß sie besser handhabbar sind, Trennmedien bei ihrer Stapelung nicht mehr verwendet werden müssen und z. B. die bekannte elektrostatische Aufladung vermieden oder leicht abgeleitet werden kann. Aufgrund der Prägung und gegebenenfalls der Lochungen können die Folien in Zukunft auch in Bereichen eingesetzt werden, in denen z. Zt. noch textile Stoffe verwendet werden müssen, so z. B. im Verpackungsbereich, bei Auskleidungen und dergleichen. Die Folien sind aber auch als Isolationsfolien, Abdeck- und Überzugsfolien und dergleichen einsetzbar.

## Patentansprüche

1. Vorrichtung zur Herstellung von Prägungen/Verformungen auf einer Warenbahn aus bedruckter Kunststoffolie, mit einer Prägewalze (Patrize) und einer Gegengeformtenwalze (Matrize), die über Zahnräder miteinander gekoppelt sind und deren Abstand im wesentlichen der Dicke der Kunststoffolie entspricht, wobei die Vorsprünge der Prägewalze außerhalb oder im Bereich des Umfanges der Gegengeformtenwalze umlaufen, dadurch gekennzeichnet, daß die Oberfläche der Prägewalze (1) und die Oberfläche der Gegengeformtenwalze (2) aus verchromtem Kupfer bestehen und entsprechend Tiefdruckwalzen geätzt sind.

2. Vorrichtung nach Anspruch 1, dadurch gekennzeichnet, daß die Vorsprünge (6) der Prägewalze (1) zur Erzeugung einer Lochung der Folie (3) im Mikrobereich an ihrer Spitze scharfkantig ausgeführt sind.

## Claims

1. Apparatus for embossing/deforming a web of printed synthetic plastics film, with an embossing roller (punch) and a mating roller (die) which are coupled together by gears and are spaced by substantially the thickness of the plastics film, the projections on the embossing roller rotating outside or in the vicinity of the periphery of the mating roller, characterised in that the surface of the embossing roller (1) and the surface of the mating roller (2) are of chromium-plated copper and are etched in the manner of gravure print cylinders.

2. Apparatus as claimed in claim 1, characterised in that the projections (6) on the embossing roller (1) have sharp edges at the tip in order to produce perforation of the film (3) in the micro range.

## Revendications

1. Dispositif pour la réalisation d'estampages/déformation sur une bande de feuille en matière plastique imprimée, comportant un rouleau d'estampage (poinçon) et un contre rouleau formé (matrice), qui sont couplés l'un à l'autre par l'intermédiaire de roues dentées et dont l'écart correspond à l'épaisseur de la feuille de matière plastique, les saillies du rouleau d'estampage tournant à l'extérieur ou dans le voisinage de la périphérie du contre rouleau formé, caractérisé en ce que la surface du rouleau d'estampage (1) et la surface du contre rouleau formé (2) sont constitués de cuivre chromé et sont gravés comme des rouleaux d'emboutissage.

2. Dispositif selon la revendication 1, caractérisé en ce que les saillies (6) du rouleau d'estampage (1) sont realisées à angles vifs sur leurs pointes de manière à produire un perçage de la feuille (3) dans le domaine microscopique.